# EUROPEAN PATENT APPLICATION

(11) **EP 1 961 287 A1**
(43) Date of publication of application: **27.08.2008**
(21) Application number: 06834355.7
(22) Date of filing: 09.12.2006
(51) Int. Cl.: A01D 34/76, A01D 34/68

(54) **BENDING ATTACHMENT AND PORTABLE MOWING MACHINE MOUNTED WITH THIS**

(30) Priority: 12.12.2005 JP 2005357920; 17.04.2006 JP 2006113457
(71) Applicant: Yugen Kaisha Maruiwa Shokai, Nagano 389-0003 (JP)
(72) Inventor: KOSHIHARA, Toru, Oomachi-shi Nagano 389-0003 (JP)
(74) Representative: Gill, Stephen Charles
(86) International application number: PCT/JP2006/324600
(87) International publication number: WO 2007/069551

(57) **Abstract**

The present invention provides a portable mowing machine, in which an angle of connection of a blade unit with respect to a support rod is adjustable, and a bending attachment used for this machine. The bending attachment 40, which is attached to the portable mowing machine 10, in which a power of a power source unit 30 is transmitted to a blade unit 50 by power transmitting means passing through a support rod 20, and an angle of support of the blade unit 50 with respect to the support rod 20 is set variable, comprises: a bending unit 46 in which link units 44 linked by link pins 43 are serially provided; and connection units 47 provided at opposite ends of the bending unit 46 for connection to the support rod 20 and the blade unit 50 respectively, and the bending attachment is **characterized in that** each of the link pins 43 is formed with an insertion hole 43a, which is formed in a direction perpendicular to the link pin 43 and through which a power wire 70 joined with the power transmitting means can be inserted.

## Description

### FIELD OF TECHNOLOGY

The present invention relates to a bending attachment and a portable mowing machine mounted with the bending attachment, more precisely relates to a bending attachment, which is capable of adjusting an angle of a blade unit, and a portable mowing machine mounted with the bending attachment.

### BACKGROUND TECHNOLOGY

In a portable mowing machine, a power source unit and a blade unit are attached to a rod having a prescribed length. These days, some portable mowing machines, in each of which an angle of connection of a blade unit with respect to the rod can be adjustable, are provided. An example of the portable mowing machine is disclosed in Document 1.

In the portable mowing machine disclosed in the Document 1, the connection angle of the blade unit with respect to the rod is adjustable. In comparison with the conventional portable mowing machine in which the connection angle of the blade unit with respect to the rod is fixed, a workload of mowing in a sloping ground, e.g., embankment, can be highly reduced by said structure, so that the disclosed mowing machine is suitably used.

Document 1: Japanese Utility Model Gazette No. 5-15720.

### DISCLOSURE OF THE INVENTION

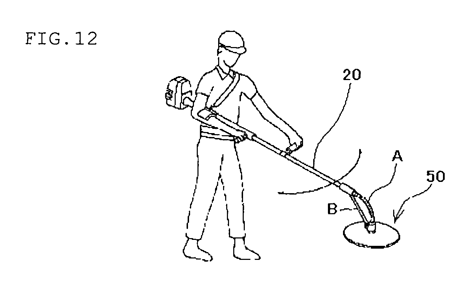

The portable mowing machine disclosed in the Document 1 has a transmission shaft holding tube A, in which at least a bending section is composed of a flexible material, and a blade support arm B, which connects and fixes the blade unit 50 to the rod 20 as shown in Fig. 12 so as to prevent the blade unit 50 from being directed in unexpected directions with respect to the rod 20. By providing the blade support arm B, a bending angle of the blade unit 50 with respect to the rod 20 can be suitably maintained. However, in case of actually mowing grasses, the mowing machine is swung in a direction indicated by an arrow shown in Fig. 12, so mown grasses will get jammed in a space between the transmission shaft holding tube A and the blade support arm B and resistance will be created, therefore there is a problem of reducing the efficiency of the mowing work.

The present invention was conceived to solve the above described problem, and an object is to provide a bending attachment, which is capable of adjusting an angle of connection of a blade unit with respect to a support rod, preventing mown grasses from getting jammed and increasing working efficiency, and portable mowing machine equipped with the bending attachment.

To achieve the object, the present invention has following structures. Namely, the bending attachment used by being attached to a portable mowing machine, in which a blade unit is attached to a front end of a support rod whose base section is attached to a power source unit and a power of the power source unit is transmitted to the blade unit by power transmitting means passing through the support rod, wherein an angle of support of the blade unit with respect to the support rod is set variable, comprises: a bending unit in which link units linked by link pins are serially provided; connection units being provided at opposite ends of the bending unit for connection to the support rod and the blade unit respectively; and a power wire having one end, which is connected to a power transmitting member of the support rod, and the other end, which is connected to a power transmitting member of the blade unit, and the bending attachment is characterized in that each of the link pins is formed with an insertion hole, which is formed in a direction perpendicular to the link pin and through which a power wire joined with the power transmitting means can be inserted.

Further, an outer circumferential face of the bending unit is covered with a covering member.

With this structure, external shocks applied to the bending attachment can be lessened.

The covering member may be a spring.

With this structure, unexpected deformation of the bending attachment, which is caused by own weight of the bending attachment, can be prevented, and action transmitting means, which will be described later, can be protected.

In the bending attachment, a hollow and bendable insertion member may be inserted through the insertion hole, and the power wire may be inserted through the insertion member.

By preventing the power wire from directly contacting the link pins, abrasion of the link pins can be prevented and the bending unit can be easily bent.

The insertion member may be a spring.

With this structure, the insertion member can be flexibly deformed with the deformation of the bending unit, a production cost of the bending attachment can be reduced, and abrasion of the power wire and the link pins can be prevented.

Further, the portable mowing machine of the present invention comprises: a support rod having a base section attached to a power source unit; a blade unit being attached to a front end of the support rod; a power transmitting member passing through the support rod and transmitting a power of power source unit to the blade unit, and the above described bending attachment is provided between the support rod and the blade unit, and an angle adjustment unit, which is capable of adjusting a bending angle of the blade unit with respect to the support rod, is provided to the support rod.

In the portable mowing machine, the angle adjustment unit may have two action transmitting means, which transmit actions of a control lever, and an operative direction of one of the action transmitting means with respect to an operative direction of the control lever may be opposite to that of the other action transmitting means with respect to the operative direction of the control lever.

With this structure, a bending angle of the blade unit with respect to an operative range of the control lever can be widened.

In the present invention, the bending unit has a link structure like a chain, so that the blade unit can be bent in only one direction perpendicular to an axis of the support rod. With this structure, a blade support arm, which connects and fixes the blade unit to the support rod, can be omitted. Therefore, mown grasses will not get jammed in the bending attachment, and the inexpensive portable mowing machine, which can be easily handled and can increase working efficiency, can be produced.

By attaching the bending attachment of the present invention to the conventional portable mowing machine, the conventional portable mowing machine can get the bending function of the blade unit with a low cost. Even if the bending unit is broken, the bending unit can be exchanged so that a running cost can be reduced.
Further, when the bending unit is attached, a total length of the support rod can be adjusted, so the length of the portable mowing machine can be adjusted to a height of a user and tiredness of the user can be highly reduced.

### BRIEF DESCRIPTION OF THE DRAWINGS

Fig. 1 is a perspective view of an embodiment of a portable mowing machine.
Fig. 2 is a sectional view of a support rod in a direction perpendicular to an axial line of the support rod.
Fig. 3 is an enlarged explanation view of a blade unit shown in Fig. 1.
Fig. 4 is a plan view showing a structure of a bending attachment.
Fig. 5 is a front view showing the structure of the bending attachment.
Fig. 6 is a front view of a bending unit in a bent state.
Fig. 7 is a plan view of an angle adjustment unit.
Figs. 8A and 8B are explanation views showing an example of using states of the portable mowing machine relating to the present invention.
Fig. 9 is a schematic plan view of a bending attachment of a second embodiment.
Fig. 10 is an explanation view of an angle adjustment unit of the second embodiment.
Fig. 11A is a plan view of the unit shown in Fig. 10, and Fig. 11B is a bottom view thereof.
Fig. 12 is an explanation view of an example of the conventional technology.

### OPTIMUM EMBODIMENTS OF THE INVENTION

### (First Embodiment)

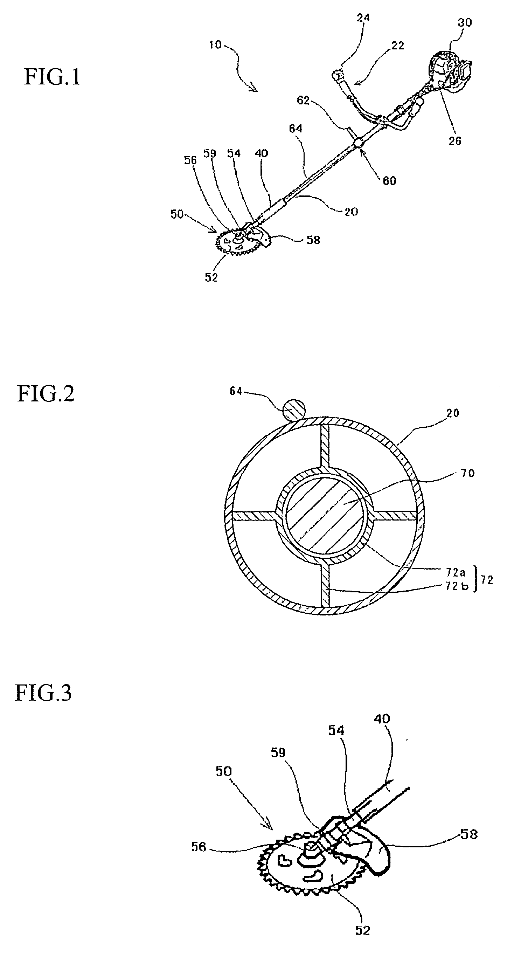

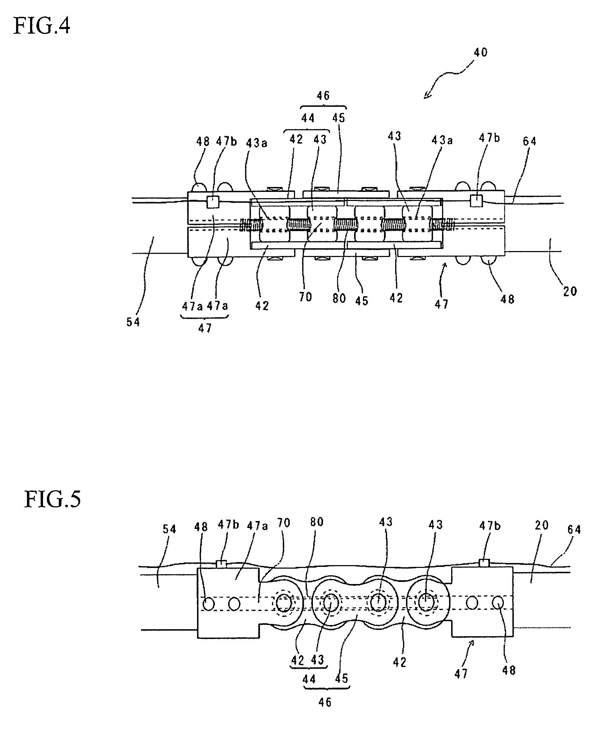

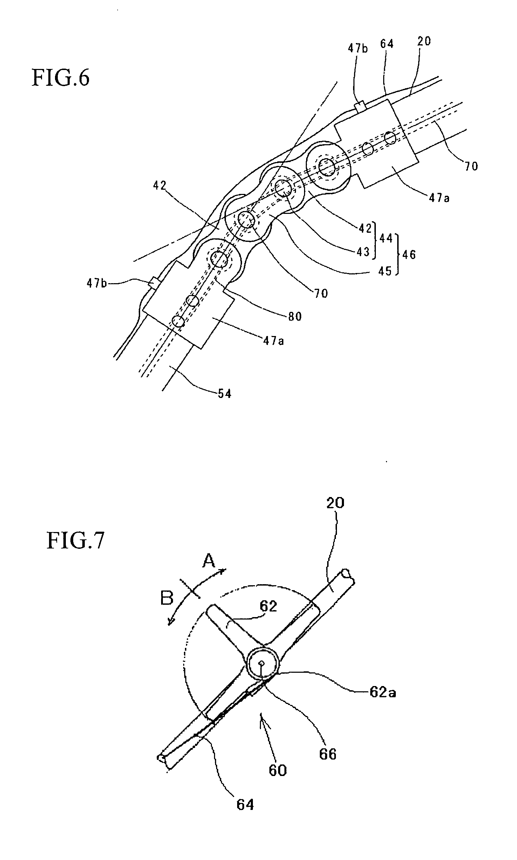

Firstly, a portable mowing machine equipped with a bending attachment of the present invention will now be explained with reference to the accompanying drawings. Fig. 1 is a perspective view of an embodiment of the portable mowing machine. Fig. 2 is a sectional view of a support rod in a direction perpendicular to an axial line of the support rod. Fig. 3 is an enlarged explanation view of a blade unit shown in Fig. 1. Fig. 4 a plan view showing a structure of the bending attachment. Fig. 5 is a front view showing the structure of the bending attachment. Fig. 6 is a front view of a bending unit in a bent state. Fig. 7 is a plan view of an angle adjustment unit.

The portable mowing machine 10 of the present embodiment comprises: a support rod 20; an engine 30, which is an example of a power source unit, being provided to one end of the support rod 20; a bending attachment 40 being connected to the other end of the support rod 20; a blade unit 50 being connected to the bending attachment 40; and an angle adjustment unit 60 for adjusting a bending angle of the bending attachment 40 with respect to the support rod 20. A power of the engine 30 is transmitted to the blade unit 50 via a power wire 70 passing through the support rod 20.

Next, the support rod 20 will be explained.

The engine 30 is attached to the one end of the support rod 20. An axial line of an output shaft (not shown) of the engine 30 is coaxial with that of the support rod 20.

The bending attachment 40 is connected to the other end of the rod 20 (the opposite end to the end equipped with the engine 30). A protection cover 48 is provided to the bending attachment 40. The protection cover 48 is composed of a flexible material. Preferably, it may be composed of a weather-resistant material or an oil-resistant material. In the present embodiment, the protection cover 48 is composed of synthetic rubber.

A handle 22 for entirely controlling the portable mowing machine 10 is provided to a mid part of the support rod 20. A throttle lever 24 is provided to the one end of the handle 22. The throttle lever 24 is connected to a throttle of the engine 30 by a throttle wire 26. An angle adjustment unit 60 for adjusting a bending angle of the bending attachment 40 is provided to a part of the rod 20 near the handle 22.

As shown in Fig. 2, the support rod 20 has a hollow structure. A power wire 70 for transmitting the power of the engine 30 to the blade unit 50 and a power wire support unit 72 are inserted in the hollow space of the support rod 20.

The one end of the power wire 70 is connected to a front end of the output shaft of the engine 30 by a connector, not shown. The power wire support unit 72 is constituted by an insertion tube 72a and spacers 72b, which are radially extended from an outer face of the insertion tube 72a until contacting the inner face of the support rod 20. The power wire support unit 72 is extended from a connecting section of the output shaft of the engine 30 and the power wire 70 to a prescribed position, which is a prescribed distance away from a connecting section of the bending attachment 40.

Next, the blade unit 50 will be explained.

As shown in Fig. 3, the blade unit 50 is comprises: a rotary blade 52; a connection rod 54 for connecting to the bending attachment 40; a power conversion unit 56 for converting the power transmitted by the power wire 70 into a rotary motion of the rotary blade 52; and a cover 58 for preventing mown grass from scattering. The blade unit 50 is attached to the bending attachment 40 by inserting the connection rod 54 into a mounting section 46 of the bending attachment 40 and fixing the same with a screw.

The connection rod 54 has a hollow structure, and the power wire support unit 72 is inserted in the hollow space of the connection rod 54 as well as the support rod 20. The power wire support unit 72 is extended from the power conversion unit 56 to a prescribed position, which is a prescribed distance away from a connecting section of the bending attachment 40.

In the present embodiment, the power conversion unit 56 is constituted by gears. A driven gear (not shown) of the power conversion unit 56 is coaxially provided with the rotary blade 52, and an outer face of the driven gear is covered with a gear cover. A drive gear (not shown), which is coaxially provided with the power wire 70, is provide to a front end of the power wire 70. The drive gear is connected to the power wire 70 by a connector as well as the connection between the power wire 70 and the engine 30. The drive gear and the driven gear are mutually engaged, and their rotational axes are orthogonally intersected.

The cover 58 is fixed to the connection rod 54 and covers a part of the rotary blade 52 on the user side. The cover 58 is composed of a light and durable material. In the present embodiment, the cover 58 is composed of reinforced plastic.

Next, the bending attachment 40 will be explained.

As shown in Figs. 4 and 5, the bending attachment 40 is constituted by: a bending unit 46 including link sections 44, which are serially connected by outer link plates 45 and in each of which inner link plates 42 are connected by link pins 43; and connection units 47 for connecting the bending attachment to the support rod 20 and the blade unit 50. For example, as shown in Fig. 5, in the bending attachment 40, the connection units 47 are respectively provided to both ends of a chain.

In each of the connection units 47, two connection pieces 47a, each of which is constituted by: a curved plate having a circular arc-shaped section; and a flat plate whose shape is the same as that of the outer link plate 45 and which is extended from an edge of the curved plate, are arranged to face each other. The connection units 47 are respectively provided to the both ends of the bending unit 46 formed like a chain, and the flat plates of the connection pieces 47a are connected to the inner link plates 42 instead of the outer link plate 45, so that they can be connected to the bending unit 46.

Since the connection pieces 47a and 47a are separately faced each other, an inner diameter of the connection unit 47 can be suitably changed. Note that, the support rod 20 and the connection rod 54 of the blade unit 50 are fixed to the connection units 47 by screws 48. In each of the connection units 47, a cable holding section 47b, which is capable of holding an adjust cable 64 for bending the bending attachment 40 by engaging or inserting the cable, is provided to one of the connection pieces 47a.

The bending attachment 40, which is connected to the support rod 20 and the connection rod 54 of the blade unit 50, can be bent in only one direction perpendicular to the axial line of the support rod 20 (the direction from an upper face of the support rod 20 to a lower face thereof seen from the user). Therefore, stoppers, which are employed in the conventional mowing machine so as to restrain the bending attachment 40 to be bent in a swing direction while mowing grass, can be omitted.

Insertion holes 43a for inserting the power wire 70 through the bending attachment 40 are formed in the link pins 43. The insertion holes 43a penetrate the link pins 43 in the axial direction of the support rod 20. The power wire 70 passes through a coil spring 80, which is an insertion member passing through the insertion holes 43a, so that the power wire passes through the insertion holes 43a. When the bending attachment 40 is made coaxial with the support rod 20 (i.e., in a state of straightening the bending attachment 40), a length of the coil spring 80 is designed to make the ends of the coil spring 80 respectively contact the power wire support units 72 provided in the support rod 20 and the connection rod 54 of the blade unit 50. The coil spring 80 need not be fixed.

As shown in Fig. 6, the bending attachment 40 is bent by loosening the adjust cable 64 provided between the cable holding sections 47b. The bending attachment 40 is bent at the link pins 43 like a kinked line, but the coil spring 80 passing through the insertion holes 43 is bent like a smooth curved line. Since the power wire 70 is inserted through the coil spring 80 bent like the smooth curved line, the power wire 70 is also smoothly curved and abrasion, which is caused by contact with the link pins 43, can be prevented. Therefore, the power of the engine 30 can be efficiently transmitted to the rotary blade 52, and maintenance of the bending attachment 40 can be simplified.

Next, the angle adjustment unit 60 will be explained.

As shown in Figs. 1 and 7, the angle adjustment unit 60 is constituted by a control lever 62 and the adjust cable 64, which is engaged with engage sections 59 of the blade unit 50 and the control lever 62. The control lever 62 can be turned about a shaft 66. One end of the adjust cable 64 is engaged with a base section 62a of the control lever 62. Namely, tension of the adjust cable 64 between the base section 62a of the control lever 62 and the engage section 59 of the blade unit 50 can be adjusted by the control lever 62.

By adjusting the tension of the adjust cable 64 with the control lever 62, the bending angle of the bending attachment 40 can be controlled. The adjust cable 64 is provided on the outer face of the support rod 20.

Concretely, by turning the control lever 62 in a direction A to reduce the tension of the adjust cable 64 between the engage section 59 of the blade unit 50 and the base section 62a of the control lever 62, the blade unit 50 is downwardly moved toward the lower face of the support rod 20 by the gravity, so that the bending attachment 40 is bent toward the lower face of the support rod 20 (i.e., bent downward). On the other hand, by turning the control lever 62 in a direction B to increase the tension of the adjust cable 64 between the engage section 59 of the blade unit 50 and the base section 62a of the control lever 62, the blade unit 50 is upwardly moved toward the upper face of the support rod 20 against the gravity, so that the bending attachment 40 is bent toward the upper face of the support rod 20 (i.e., bent upward).

Further, a stopper, not shown, is provided to the angle adjustment unit 60, so the bending attachment 40 can be held in an optional bent state, in which the bending attachment is bent at an optional position or a prescribed angle, or the bending angle of the bending attachment can be varied at regular angular separations.

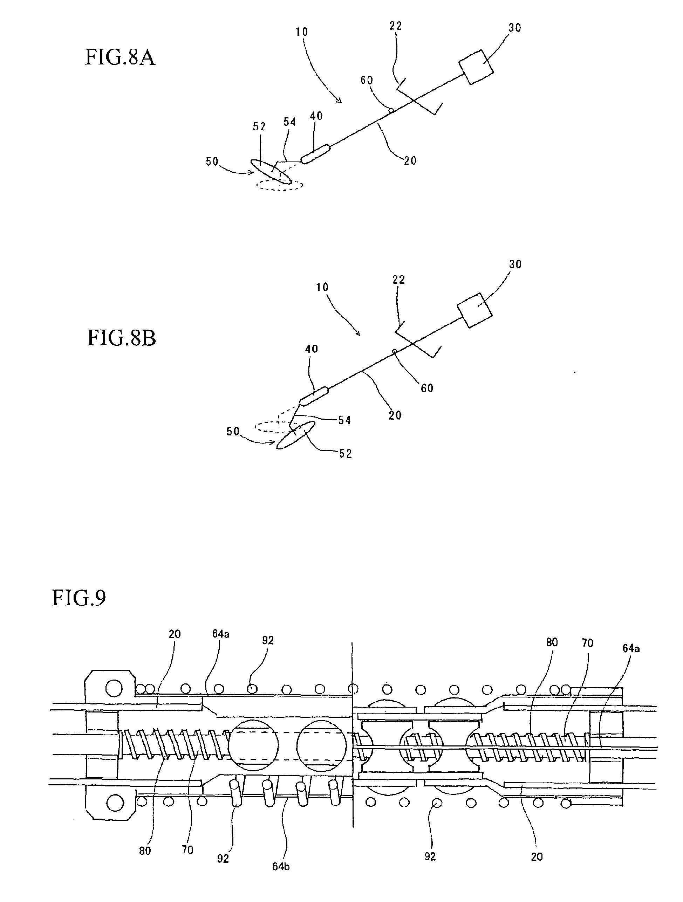

Figs. 8A and 8B are explanation views showing an example of using states of the portable mowing machine 10 of the present embodiment.

Firstly, Fig. 8A will be explained. Fig. 8A shows a suitable state for mowing grass in a sloping ground, e.g., embankment, from a lower end to an upper end. On the other hand, Fig. 8B shows a suitable state for mowing grass in a sloping ground, e.g., embankment, from an upper end to a lower end. The portable mowing machine 10 of the present invention can be suitably used to mow grass in the sloping ground. Depending on a position of a fulcrum point of the adjust cable 64, the bending attachment 40 can be upwardly and downwardly bent, about 30 degrees, in the direction perpendicular to the axial line of the support rod 20, so the bending attachment 40 can be suitably bent with respect to most slope grounds.

### (Second Embodiment)

Another embodiment of the bending attachment 40 will be explained. Note that, in the present embodiment, the structural elements explained in the first embodiments are assigned the same symbols and explanation will be omitted.

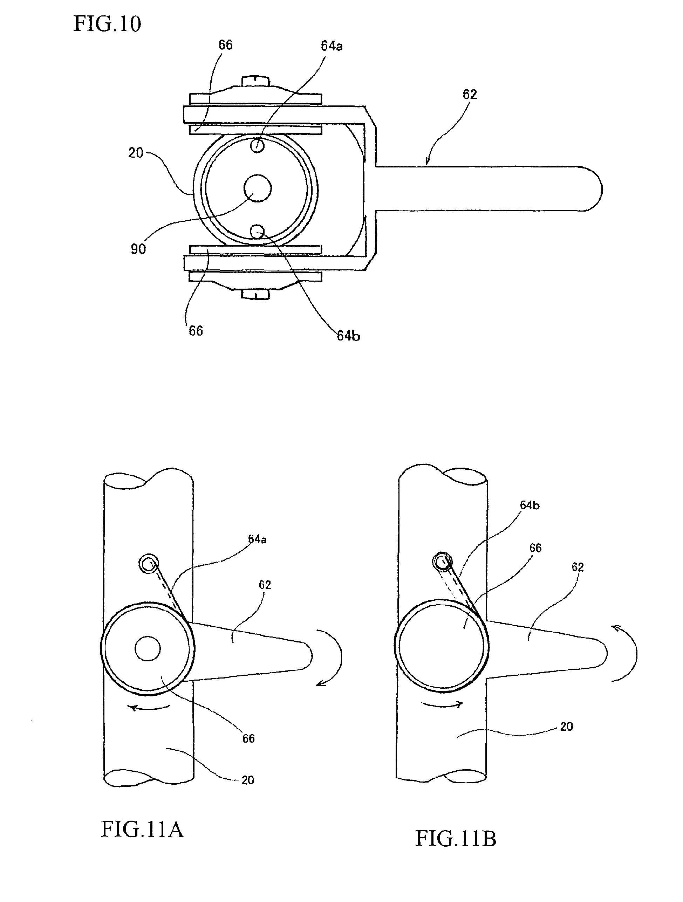

Fig. 9 is a schematic plan view of a bending attachment of the present embodiment. Fig. 10 is an explanation view of an angle adjustment unit of the present embodiment. Fig. 11A is a plan view of the unit shown in Fig. 10, and Fig. 11B is a bottom view of the unit shown in Fig. 10.

In the present embodiment, a shaft 90, which is power transmitting means for transmitting the power of the power source unit, e.g., engine 30, to the blade unit, is provided in the support rod 20. The shaft 90 is connected to the power wire70 of the bending unit 40 by adapters (not shown), which are respectively provided to ends of the shaft 90 located on the side of the front end part of the support rod 20 (on the opposite side of the engine 30) and on the side of the base section of the blade unit 50. The power wire 70 is connected to the adapter by connecting the power wire 70 to one end of the adapter, whose the other end is fixed to the front end of the shaft 90, and then caulking the one end of the adapter.

In the present embodiment, as shown in Fig. 9, a spring 92 is used for covering (protecting) the bending unit 46 of the bending attachment 40. The spring 92 covers over the outer face of the bending unit 46. The spring 92 is detachably attached to the bending unit 46, so maintenance of the bending unit 46 can be easily performed.

By employing the spring 92 as a covering member (protecting member), the covering member (protecting member) has flexing resistance, so that unexpected downward bending of the bending attachment 40, which is caused by own weight, can be prevented, and damaging the bending unit 46, which is caused by colliding the bending unit 46 with a stone, etc. while mowing grass, can be prevented.

In the spring 92 shown in Fig. 9, which is used as the covering member (protecting member), the spring wire is sparsely wound with separations in the state of straightening the spring 92; if the spring wire of the spring 92 is thickly wound with no separations (i.e., thick spring 92 is used), the damage of the bending unit 46 can be further suitably prevented.

The angle adjustment unit 60 of the present embodiment has the control lever 62 and two action transmitting means (the adjust cables 64) for transmitting action of the control lever 62. As shown in Fig. 10, adjust cables 64a and 64b are oppositely arranged on the side face of the support rod 20. In the present embodiment, the adjust cables 64a and 64b are respectively provided on the upper face and the lower face of the support rod 20. The control lever 62 is provided to mid parts of the adjust cables 64a and 64b. The control lever 62 is formed into a Y-shape and attached to the support rod 20 by clamping the outer face of the support rod 20 with the spaced front part. A reel member 66 for holding the adjust cables 64 is provided between the support rod 20 and the control lever 62, and the control lever 62, the reel member 66 and the support rod 20 are integrated by a screw. The reel member 66 can be turned together with the control lever 62.

One ends of the adjust cables 64a and 64b are engaged with the reel member 66; the other ends thereof are engaged with the engage section 59 of the blade unit 50. In the engage section 59 too, the adjust cable 64a is engaged on the side of the upper face of the support rod 20; the adjust cable 64b is engaged on the side of the lower face of the support rod 20.

In the angle adjustment unit 60 of the present embodiment, by turning the control lever 62 in a direction of an arrow shown in Fig. 11A, the adjust cable 64a is wound on the reel member 66 as shown in Fig. 11A and the adjust cable 64a applies a pulling force to the blade unit 50. On the other hand, the other adjust cable 64b is extended from the reel member 66 as shown in Fig. 11B and the adjust cable 64b applies a pushing force to the blade unit 50. By the actions of the two adjust cables 64a and 64b, the blade unit 50 is bent upward with respect to the support rod 20. In the present embodiment, the maximum bending angle of the blade unit 50 in the upper direction, with respect to the support rod 20, is set 55 degrees.

Next, by turning the control lever 62 in the opposite direction of the arrow shown in Fig. 11A, the adjust cables 64a and 64b are reversely moved, so that the blade unit 50 is bent downward with respect to the support rod 20. In the present embodiment, the maximum bending angle of the blade unit 50 in the lower direction, with respect to the support rod 20, is set 35 degrees.

In the angle adjustment unit 60, the two adjust cables 64 are used, so that the bending angle of the blade unit 50 with respect to the support rod 20 can be widely varied by slightly turning the lever 62. The bending state of the blade unit 50 with respect to the support rod 20 is held at two positions, so that variation of the bending angle of the blade unit 50 with respect to the support rod 20 is restrained while mowing grass, therefore usability of the mowing machine can be improved.

The embodiments of the portable mowing machine 10 of the present invention have been described, but the present invention is not limited to the embodiments and modifications can be allowed without deviating the scope of the invention.

For example, in the above described embodiments, the engine is employed as the power source unit, but other power sources, e.g., motor, may be employed. In case of employing an electric motor, an electric power source must be required for driving the portable mowing machine 10, so a battery, a commercial power source, etc. may be employed.

In the first embodiment, the adjust cable 64 of the angle adjustment unit 60 is exposed on the outer face of the support rod 20, but the adjust cable 64 may be provided in a space between the inner face of the support rod 20 and the power wire support unit 72, which is provided in the support rod 20, as well as the second embodiment. With this structure, an external appearance of the portable mowing machine 10 can be simplified, no grass will be entangled between the support rod 20 and the adjust cable 64, so that working efficiency can be improved and maintenance after use can be easily performed.

In the above described embodiments, the bending attachment 40 is previously attached to the portable mowing machine 10, but the bending attachment of the present invention can be attached to the conventional portable mowing machine, in which an angle of the blade unit 50 with respect to the support rod 20 cannot be adjusted. For example, a part of the support rod 20 on the blade unit 50 side is cut, and the bending attachment 40 of the present invention may be attached to the cut part. In this case, the power transmitting means, which transmits a power of a power source unit to the blade unit, is not limited.

By employing this manner, in the conventional portable mowing machine too, the angle of the blade unit 50 with respect to the support rod 20 can be adjusted and performance of the conventional portable mowing machine can be improved. Further, the total length of the portable mowing machine can be adjusted, and the angle of the blade unit 50 with respect to the support rod 20 can be adjusted, so that the portable mowing machine, whose length can be adjusted to a height of the user, can be produced with a low cost.

## Claims

1. A bending attachment used by being attached to a portable mowing machine, in which a blade unit is attached to a front end of a support rod whose base section is attached to a power source unit and a power of the power source unit is transmitted to the blade unit by power transmitting means passing through a support rod, wherein an angle of support of the blade unit with respect to the support rod is set variable, comprising:
a bending unit in which link units linked by link pins are serially provided;
connection units being provided at opposite ends of the bending unit for connection to the support rod and the blade unit respectively; and
a power wire having one end, which is connected to a power transmitting member of the support rod, and the other end, which is connected to a power transmitting member of the blade unit,
said bending attachment **characterized in that** each of the link pins is formed with an insertion hole, which is formed in a direction perpendicular to the link pin and through which a power wire joined with the power transmitting means can be inserted.

2. The bending attachment according to claim 1, wherein an outer circumferential face of the bending unit is covered with a covering member.

3. The bending attachment according to claim 2, wherein the covering member is a spring.

4. The bending attachment according to one of claims 1-3, wherein a hollow and bendable insertion member is inserted through the insertion hole, and the power wire is inserted through the insertion member.

5. The bending attachment according to claim 4, wherein the insertion member is a spring.

6. A portable mowing machine comprising:
a support rod having a base section attached to a power source unit;
a blade unit being attached to a front end of the support rod;
a power transmitting member passing through the support rod and transmitting a power of the power source unit to the blade unit,
wherein the bending attachment of one of claims 1-5 is provided between the support rod and the blade unit, and an angle adjustment unit, which is capable of adjusting a bending angle of the blade unit with respect to the support rod, is provided to the support rod.

7. The portable mowing machine according to claim 6 wherein the angle adjustment unit has two action transmitting means, which transmit actions of a control lever, and
an operative direction of one of the action transmitting means with respect to an operative direction of the control lever is opposite to that of the other action transmitting means with respect to the operative direction of the control lever.
